# EUROPEAN PATENT APPLICATION

(11) **EP 1 157 816 A2**
(43) Date of publication of application: **28.11.2001**
(21) Application number: 01304413.6
(22) Date of filing: 18.05.2001
(51) Int. Cl.: B31D 5/00

(54) **Dunnage material and process**

(30) Priority: 12.12.2000 US 735111; 12.12.2000 US 435345; 18.05.2000 WO PCT/US13/00784
(71) Applicant: AUTOMATED PACKAGING SYSTEMS, INC., Streetsboro, Ohio 44241 (US)
(72) Inventor: Bernard Lermer, Ohio 44241 USA (US); Rick S. Wehrmann, Ohio 44241 USA (US)
(74) Representative: Lock, Howard John

(57) **Abstract**

A process of forming dunnage (56) comprises feeding a chain interconnected plastic pouches (38) along a path of travel to an inflation station (24) each of a plurality of pouches is sequentially opened as each such pouch is at the inflation station by directing a flow of air through a small fill opening (50'. 50") in a face of each pouch. Each opening is in the form of a slit disposed transversely to the air flow. The air is directed substantially tangentially of the face. The width of the fill opening is no more than about 25 percent of the width of the pouch. The opening step is performed as to each pouch as it is positioned in the inflation station, thereby separating the face from the back of each such pouch. A flow of air is directed through each such fill opening of each opened pouch to inflate each opened pouch. Each such inflated pouch is sealed to close each such fill opening and thereby create hermetically closed and inflated dunnage units.

## Description

### Technical Field

This invention relates to dunnage and more particularly to novel and improved webs of interconnected dunnage pouches and processes of producing dunnage with such webs.

### Background Art

U.S. Patents RE36,501 and RE36,759 respectively entitled "Method for Producing Inflated Dunnage" and "Inflated Dunnage and "Method for its Production" and respectively issued September 31 1996 and December 2, 1997 to Gregory A. Hoover et al. (the Dunnage Patents) disclose a method for producing dunnage utilizing preopened bags on a roll. The preopened bags utilized in the Dunnage Patents are of a type disclosed in Patent 3,254,828 issued June 2, 1966 to Hershey Lerner and entitled "Flexible Container Strips" (the "Autobag Patent"). The preferred bags of the Dunnage Patents are unique in that the so-called tack of outer bag surfaces is greater than the tack of inner surfaces to facilitate bag opening while producing dunnage units which stick to one another when in use.

### Summary of the Invention

The preferred embodiment of the present invention enhances the production of dunnage with a system which is an improvement over the process disclosed in the Dunnage Patents. Specifically, with the preferred embodiment of the present invention a web in the form of a chain of interconnected pouches is provided. Each of the pouches is preferably closed other than for a small fill opening in the form of a slit in one or both faces. Thus, the pouches contrast with bags each of which is fully open across a top portion as is the case with the Dunnage Patents and the chains of bags taught in the Autobag Patent.

The use of small slits obviates a problem that exists with the approach taught by the Dunnage Patents. Specifically, if either the face or back of a bag as used in the Dunnage Patents is uneven when a seal is formed, such as by wrinkling, the seal will not be fully hermetic and air will leak from the sealed bag. With the pouches of the preferred embodiment of the present invention consistent hermetic seals are produced and air leakage from dunnage units is avoided.

A "multiple up" arrangement is preferably provided for some applications such as when higher volume is desired. With the so-called multiple up arrangement, two or more side connected strips of interconnected pouches are preferably provided. The side connections are preferably frangible to facilitate ready separation of the strips. Preferably a slit opening is provided near the top, of each pouch and near the side connections in order that a single source of air can concurrently inflate two pouches, one in each strip.

In producing dunnage with the improved chain of pouches, a bagging machine of the type disclosed and claimed in Patent Nos. 5,289,671 issued March 1, 1994 and 5,394,676 issued March 7, 1995 each to Bernard Lerner et al. each under the title "Packaging Machine and Method" (the "Jam Prevention" and the "Excel Patent") is preferably utilized. The machine preferably has an air nozzle which emits a flow of air during a dunnage formation portion of a cycle. The flow of air is preferably directed along a pouch face and across the small slit opening of a pouch positioned at a fill station.

The axis of the air flow is preferably tangential to a face of a pouch being inflated. That is, the axis of the air flow is preferably parallel to the plane of the web. This parallel relationship is effective in the preferred embodiment to cause air to flow through a small slit opening in a pouch being inflated. While satisfactory results have been achieved in tests with flow at an angle of from about O° to about 45° with the web as measured upstream from the fill opening, the zero angle flow is preferred because it creates a low pressure area adjacent the pouch causing the pouch to "pop" open and thereafter receive inflating air.

In the preferred embodiment, once the flow of air has inflated a pouch, the flow is continued until shortly before a heat sealer has closed on the inflated pouch, to effect a seal closing the pouch in an inflated condition to trap the inflation air in the pouch. In order to control the pressure within a pouch being sealed the machine is preferably further modified so that a pouch being inflated is confined to limit air intake into the pouch immediately prior to seal closure. Air is preferably limited so that pressure of the inflation air will not cause heat softened plastic adjacent the seal to rupture. In the preferred embodiment, the reduced pressure also provides yieldability to finished dunnage units and assures that units will not rupture at higher altitudes such as in an unpressurized cargo hold of an aircraft.

In the preferred embodiment, the seal is an hermetic closure formed between front and back layers of the pouch such that an hermetic closure surrounds the space. The hermetic closure preferably consists of side folds or seals and top and bottom seals formed as the chain of pouches is produced, and the closure seal is preferably effected after the pouch has been inflated.

The machine modification which effects control of the air volume is preferably the provision of coacting elements to engage the face and back of an inflated pouch at locations spaced from a location where a seal is to be formed. In the preferred arrangement, the back element is fixed relative to a sealer bar. The face element is carried by a cylinder which is supported by the bagging machine. Commencing prior to the bar and pad being relatively moved toward one another to compress an inflated pouch for sealing, the elements are preferably relatively moved toward one another into compressing, air expelling engagement with the inflated pouch to define the volume of the air within finished dunnage unit

Dunnage units produced by the described equipment and process are usually deposited in a dunnage dispensing mechanism. The preferred dispensing mechanism is described and claimed in a concurrently filed Application by Rick Wehrman under the title DUNNAGE MACHINE claiming priority from US.SN. 09/735,111.

Accordingly, an advantage of the preferred embodiment of the invention is that it provides a novel and improved chain of interconnected pouches and a process of producing dunnage units with those pouches.

### Brief Description of Drawings

Figure 1 is a fragmentary side elevational view of the machine of the Excel Patent modified in accordance with the present invention;
Figure 2 is an elevational view of the machine's fill station;
Figure 3 is a plan view of a section of one embodiment of the web of this invention;
Figures 4A-F are a schematic sequential showing of the dunnage formation process of the present invention;
Figure 5 is a plan view corresponding to Figure 3 showing the now preferred web;
Figure SA is a plan view of a dunnage unit formed from a pouch of Figure 5;
Figure 6 is a plan view corresponding to Figures 3 and 5 showing the double-up web of the present invention; and
Figure 7 is an elevational view of the now preferred pouch sealing mechanism.

### Detailed Description of the Drawings

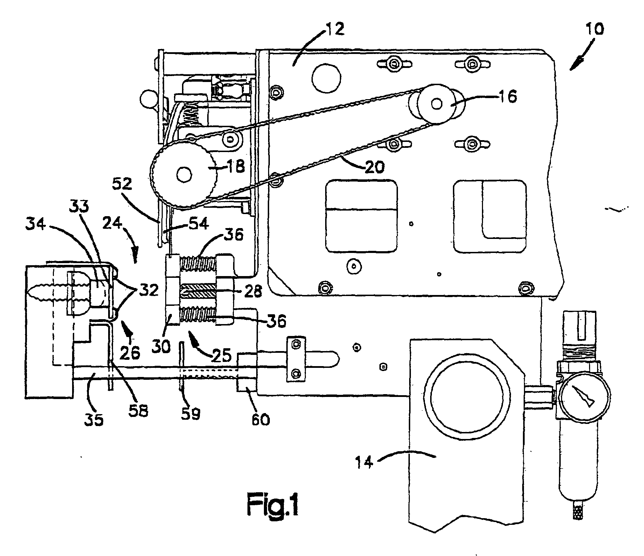

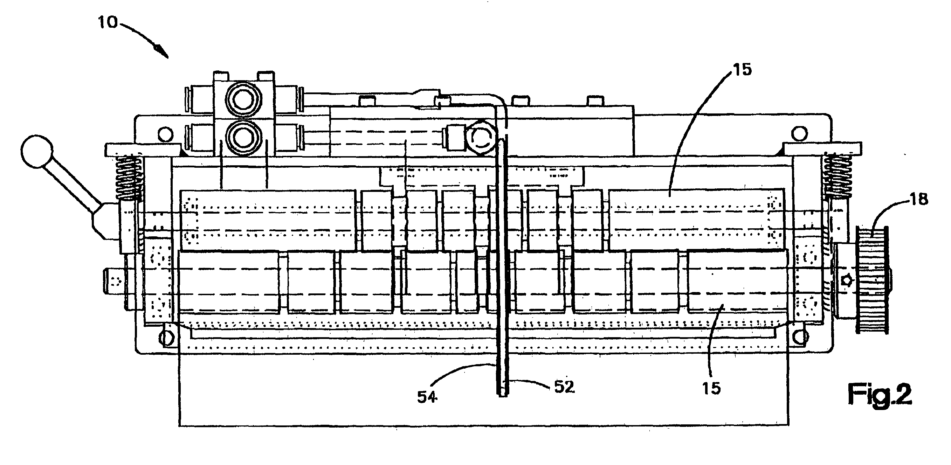

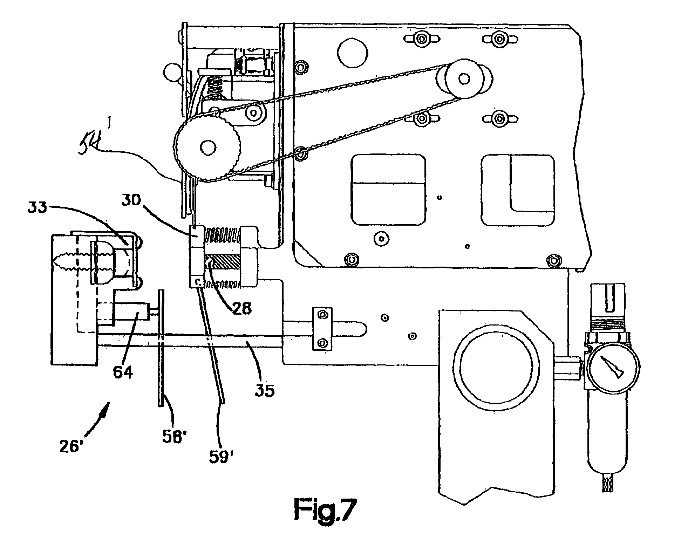

Figures 1 and 2 correspond respectively to Figures 2A and 7 of the Excel Patent modified to embody features to enable practice of the method of the present invention. The present disclosure of the machine of the Excel Patent will be limited to that portion of the machine which enables practice of the present invention. For a complete description of the entire machine of the Jam Prevention and the Excel Patents, we hereby incorporate the Jam Prevention and Excel Patents by reference.

Referring to the drawings and to Figure 1 in particular, a fragmentary section of the machine of the Excel Patent is shown generally at 10. The machine includes a section 12 known as a bagger which is mounted on a support post 14.

The bagger 12 includes a pair of oppositely rotatable feed rolls 15, Figure 2. Feed roll drive is accomplished through a motor not shown which is operatively connected to a drive wheel 16. The drive wheel 16 in turn drives a feed roll drive wheel 18 via a belt 20. The drive wheels are intermittently rotated to feed a web 22 through the machine and outwardly and downwardly to an inflation or fill and seal station shown generally at 24.

A web sealer is provided that includes sealer and pressure pad subassemblies 25,26. The sealer subassembly includes a fixedly mounted heat element or sealer bar 28 and a spring biased protective plate 30. The pressure pad subassembly 26 is mounted on a pair of reciprocatable rods 35, one of which is shown in Figure 1. The rods in turn are connected to a suitable drive such as a cylinder which, on energization, will shift the sealer pad subassembly to the right as viewed in Figure 1 until projections 32 clamp an inflated pouch against the protective plate 30. As travel to the right continues and prior to engagement of the projections 32 with the plate 30, a jam preventor element 33 clamps the inflated pouch against the plate 30 and the element remains stationary momentarily to cause a signal to be sent to indicate the absence of a jam as described more fully in the Jam Prevention Patent. Further travel of the rods press the protective plate against the action of springs 36 until a portion of the web 22 to be sealed is clamped between the heater bar 28 and the pressure pad 24 whereupon a seal is effected.

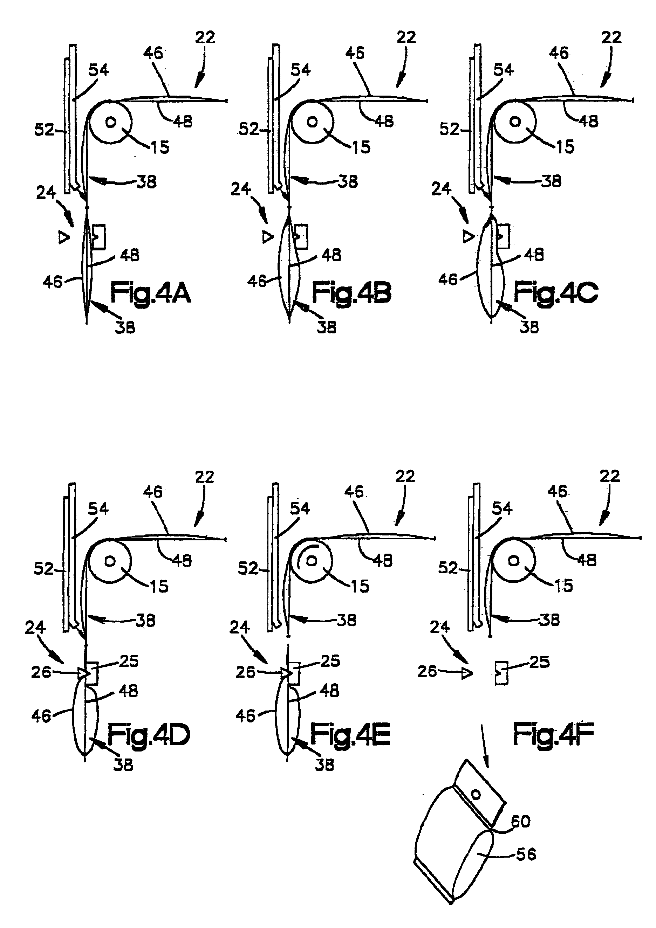

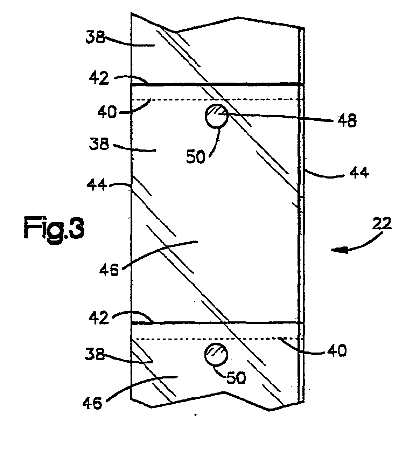

An earlier embodiment of the web 22 is best shown in Figure 3. The web is a flattened plastic tube which includes a series of interconnected pouches 38 with adjacent pouches being joined together by lines of weakness in the form of perforations 40. Thus, the lines of weakness delineate the ends of the interconnected pouches and facilitate the subsequent separation of the web into dunnage units.

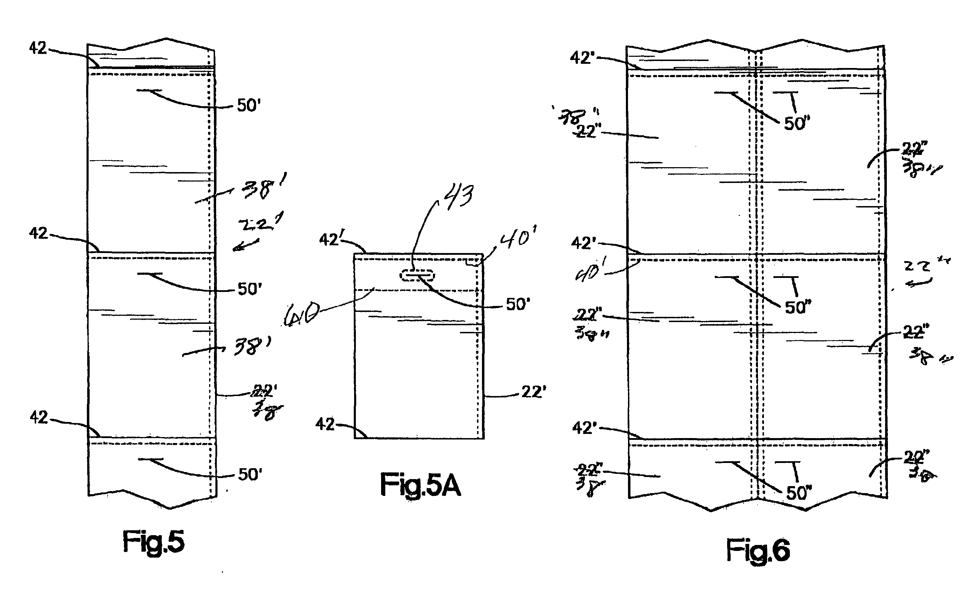

Each pouch 38 has a bottom delineated by an endless bottom seal 42. The spaced sides 44 are delineated by either folds or seals, such that a fill space for each pouch between the faces 46 and backs of 48 of the pouches is delineated by the seal 42 and the sides 44. In the embodiment of Figure 3, each pouch face has a circular fill opening 50 formed between the sides 44 and as close as practical to the bottom seal 42 of the next pouch in the web to maximize the size of the fillable space in the pouch. In Figures 5 and 6 fill openings 50' in a now preferred slit form are disclosed.

Tests have shown that slit openings 50' work very well. The slit openings provide maximized size of dunnage units from any given pouch size. The unit size is fully maximized when the line of weakness 40' is in a bottom/top seal 42' 35 shown in Figure 5A. In this embodiment a peremitral hermetic seal surrounds the fillable space in each pouch and only a small endless seal 43 around the fill opening is required to complete a dunnage unit. Optionally, for maximized assurance of an hermetic seal a side to side seal 60 is also provided as shown in Figure 5A.

In the Figure 3 and Figure 5 embodiments, in order to avoid wrinkles and resultant leaky dunnage units, each fill opening 50 or 50' is midway between the sides 44 and has a transverse dimension of the order of twenty-five percent of the width of the web or less.

The web 22 is formed of a heat sealable plastic, preferably polyethylene. While the present process can be effected with a plain polyethylene material for many applications, for packaging of heavy objects it is preferable that other surfaces have relatively high slip resistance or tack while inner surfaces of the faces and backs 46,48 have relatively low tack to enable quick and reliable opening of each pouch as it is positioned at the fill station.

In applications where the outer surfaces have a tack greater than the inner surfaces, the outer surfaces are of sufficient tackiness to cause the dunnage units to stick together sufficiently to resist relative movement when protecting a packaged heavy object. The differences in tack between the inner and outer surfaces are achieved by forming the web from either a coextruded film or a film which has a coating of a tack different than the tack of the film which it coats.

Tests of the slit openings 50' have shown that not only are they highly effective to open and direct a flow of air into pouches, but the alignment of an air nozzle with the slit opening is less critical than is alignment with a circular or oval opening 50. In such tests, 4 inch wide pouches with slit openings 3/4 inch wide were used. The preferred arrangement for opening pouches with slit openings utilizes a fill nozzle 54' as shown in Figure 7. The nozzle 54' preferably has an axis paralleling the face of a pouch being inflated. Thus, the nozzle 54' is at an angle of 0 to about 45°, the zero angle is preferred.

Tests have also shown that on occasion the air within the pouch is under sufficient pressure to cause the pouch to rupture. Moreover, pouches filled with the thus far described equipment contain a volume of air under relatively high pressure such that the dunnage units are of rather firm and in-flexible shape. It has been discovered that if the volume of air within the pouch is controlled to something less than maximized volume, the pressure of the volume of air within the pouch once completed is such that rupturing as a result of the sealing process is avoided. Moreover, controlled lower pressure than achieved with the system as previously described enables some amount of compression of the finished dunnage units to, for example, be stuffed between an item being packaged and the wall of the package.

One mechanism for controlling air pressure within a pouch is shown in Figure 1 while the now preferred mechanism is shown in Figure 7. The mechanism of Figure 1 includes a pad plate 58 fixed to and forming a part of the pressure pad assembly 26. The pad plate 58 is positioned to engage the face of a pouch as the subassembly 26 closes to effect the seal. Concurrently, a sealer plate 59 is advanced outwardly by a cylinder 60 to engage the back of the filled pouch being sealed. Thus, the pad and sealer plates 58, 59 function to squeeze the pouch and expel some air from the filled pouch immediately before it is sealed.

In Figure 7, a sealer plate 59' is fixedly mounted relative to the sealer bar 28. The sealer plate 59' slants downwardly and rearwardly. The pad plate 58' is mounted on the machine 10 and moveable in coordination with the pressure pad subassembly 26'. More specifically, a pad plate cylinder 64 is carried by the machine 10 and connected to the pad plate 58'. The cylinder 64 is connected to the pad plate 58' for movement toward and away from the sealer plate 59'. The plates 58', 59' engage an inflated pouch prior to engagement of the jam preventor element 33 and the protective plate 30 preferredly to limit the volume of air introduced into a pouch being inflated or alternately to expel air from an inflated pouch before the sealing process commences and thereby control pressure within the unit made from that pouch.

### Operation

In operation, the motor which drives the drive wheel 16 is energized to advance the web 22 until one of the pouches 38 is registered at the fill station as indicated schematically in Figure 4A. With the described web and the machine of the Excel Patent, this registration is accomplished through the use of a spark gap detector. When one of the lines of weakness 40 passes between electrodes of a spark gap detector, a spark passes between the electrodes resulting in a signal which stops the web feed. Thus, the lines of weakness function as registration indicia. Alternatively a registration system such as that described and claimed in U.S. Patent No. 4,680,208 may be employed.

The preferred arrangement utilizes a slit opening 50' and a nozzle 54', Figure 7, which emits a flow having an axis paralleling the face of a pouch to be inflated. Once a pouch is positioned at the fill station, air flow from the nozzle 54' causes the pouch to "pop" open and be filled with air.

With the preferred arrangement of Figure 7, the pad cylinder 64 is energized to extend the pad plate 58' relative to and toward the sealer plate 59'. This energization of the cylinder 64 occurs before a pouch is fed to the fill station and before the advancement of the pad subassembly 26' commences and concludes before advancement of the subassembly is completed.

Movement of the subassembly 26 or 26' to the right as viewed in the drawings brings the jam preventor element 33 into engagement with the face of the pouch to press it into flat juxtaposed engagement with the back of the pouch thus assisting in the production of a quality hermetic seal. As movement of the subassembly 26 or 26' concludes, the protective plate 30 will have been shifted to the right as viewed in Figures 1 and 7 against the action of the springs 36 until the pouch being sealed is clamped between the pad 34 and the heater bar 28 to effect a seal between the face and the back as depicted in Figure 4D. Once the filled pouch is clamped between the projections 32 and the protective plate 30, the pad plate 58' is retracted and the flow of air from the fill nozzle is terminated.

As shown in Figure 5A when the web has lines of weakness 40 spaced from the bottom seals 42, the seal being effected is a transverse seal 61 extending from side to side to complete an hermetic seal surrounding the now filled fillable space within the pouch, such that the fill opening 50 or 50' no longer communicates with the fillable space within the pouch. In the preferred embodiment, the lines of weakness 40' are in the bottom/top seals 42' as shown in Figure 6. In that event, an endless seal 43 surrounds the fill opening 50' to maximize unit size per unit length of the pouches, Figure 5A. As shown in Figure 5A, in order to maximize assurance that a pouch is hermetically sealed a redundant seal 60 is also provided.

As a pouch is being sealed, the drive wheel 16 and the rolls 15 are counter-rotated a short distance to separate the filled pouch from the web, Figure 4E. On opening of the seal assembly, the filled pouch which is now a dunnage unit 56, is dropped from the machine as indicated in Figure 4F.
Optionally, two or more dunnage units will be formed before the separation operation, so that one can produce a chain of dunnage units of a predetermined selected length.

Each produced dunnage unit is a body formed from plastic film. The body defines an hermetically enclosed space filled with air. Optionally, the body has an outer surface which is sufficiently tacky to adhere to a body of a like dunnage unit. The body of each unit is of generally rectangular configuration.

As is apparent from an examination of Figure 6, it is fully within the scope of this invention to concurrently feed two or more webs or chains of pouches and to provide as many fill nozzles 54 as are required. With so-called "multiple up' webs that is two or more adjacent and interconnected chains of longitudinally interconnected pouches 22", a plow 62 is preferably positioned between adjacent chains to rupture frangible interconnections between the chains as such a web is fed through the machine 10. Moreover, it is possible to provide chains of dunnage units by separating the units from the web only after chains of the desired number of units have been formed. Thus, separation occurs every other sealing operation for chains of two, every third operation for chains of three and so on.

Although the invention has been described in its preferred form with a certain degree of particularity, it is understood that the present disclosure of the preferred form has been made only by way of example and that numerous changes in the details of construction, operation and the combination and arrangement of parts may be resorted to without departing from the spirit and scope of the invention as hereinafter claimed.

Whilst endeavouring in the foregoing specification to draw attention to those features of the invention believed to be of particular importance it should be understood that the Applicant claims protection in respect of any patentable feature or combination of features hereinbefore referred to and/or shown in the drawings whether or not particular emphasis has been placed thereon.

## Claims

1. A process of forming dunnage (56) comprising:
a) feeding a chain of interconnected plastic pouches (38) along a path of travel to an inflation station (24);
b) sequentially opening each of a plurality of pouches as each such pouch is at the inflation station by directing a flow of air through a small fill opening (50', 50") in a face of each pouch, each opening being in the form of a slit disposed transversely to the air flow, the air being directed substantially tangentially of the face, the width of the fill opening being no more than about 25 percent of the width of the pouch, the opening step being performed as to each pouch as it is positioned in the inflation station, thereby separating the face from the back of each such pouch;
c) directing a flow of air through each such fill opening of each opened pouch to inflate each opened pouch; and
d) sealing each such inflated pouch to close each such fill opening and thereby create hermetically closed and inflated dunnage units.

2. The process of claim 1, further including separating certain of the units from tile chain after said certain units are created.

3. The process of claim 1 or claim 2, wherein external surfaces of the plastic of the pouches have greater slip resistance than inner surfaces of the pouches.

4. The process of any of claims 1 to 3 including the step of partially deflating the inflated pouch prior to the sealing step.

5. The process of any of the preceding claims, wherein the sealing step produces endless seals respectively around the seal openings.

6. A process of any of the preceding claims including the step of sequentially sensing each of a series of spaced registration indicia to stop the feeding of the chain and thereby sequentially register each of the pouches at a fill station.

7. The process of any of the preceding claims further including the step of controlling the extent of inflation by contacting the face and back of a pouch being filled prior to the sealing step.

8. The process of any of claims 1 to 7 including the step of partially deflating the inflated pouch prior to sealing.

9. A process of making dunnage units comprising:
a) feeding a chain (22) of interconnected plastic pouches (38) along a path of travel to sequentially position the pouches at a fill station;
b) directing a flow of gas through a fill opening (50, 50', 50") of each positioned pouch to inflate a positioned pouch;
c) controlling the volume of gas in each such inflated pouch to prevent the pouch from rupturing during the sealing step; and
d) sealing the pouch to form an inflated dunnage unit.

10. The process of claim 9, wherein the volume control step is effected by coaction of a pair of relatively moveable pouch engaging elements (58, 58', 59, 59').

11. The process of claim 10, wherein a prime mover (60,64) is interposed between one of the elements and a body of the machine.

12. The process of claim 11, wherein the one element is a seal bar element (30).

13. The process of claim 11, wherein the one element is a seal pad element (35).

14. For use in forming dunnage units with a packaging machine, a web comprising:
a) an elongated flattened, heat sealable, plastic tube having face and back layers interconnected along spaced side portions;
b) spaced transverse seals each extending from one side portion of the tube to the other such that each seal together with a pair of contiguous sections of the respective spaced side portions provide a continuous hermetic barrier about three sides of a fillable space between the layers;
c) spaced transverse lines of weakness formed in the layers and delineating ends of interconnected and fillable pouches each having a face layer section, the lines of weakness serving to facilitate separation of the web into dunnage units;
d) each section delineating the face of an adjacent fillable space, each section including a small fill opening located at selected one of and spaced from a given short distance from an associated one of the lines of weakness delineating a top of the section and a greater distance than the given distance from an associated one of the transverse seals delineating a space bottom; and
e) each fill opening having a transverse dimension of no greater than about twenty-five percent of the transverse dimension of the pouches.

15. The web of claim 14, wherein the transverse seals delineate both tops and bottoms of said fillable spaces.

16. The web of claim 14, wherein an outer surface of each layer has greater slip resistance than its inner surface.

17. The web of claim 14, wherein the fill openings are circular.

18. The web of claim 14, wherein the fill openings are slits.

19. The web of claim 14, wherein the fill openings are located generally midway between the side openings.

20. The web of claim 14, wherein there are at least two strips of pouches connected by frangible interconnections between adjacent side portions and the fill openings are near the adjacent side portions.

21. A dunnage unit comprising:
a) a body formed from plastic film defining an hermetically enclosed space filled with a quantity of air;
b) the body having an external surface having sufficient tack to enable adherence of the body to a body of a like dunnage unit;
c) the body being of generally rectangular configuration and having a pair of lips extending outwardly from one side, the lips being formed by a seal; and
d) one of the lips including a cut out which served as a fill opening when the unit was being inflated

22. The unit of claim 21, wherein each of the lips has a plurality of small projections extending from a side edge remote from the seal and resulting from separation of the dunnage unit from a web, the separation having been along perforated lines of weakness.

23. A process of making dunnage units comprising:
a) feeding a chain of interconnected plastic pouches along a path of travel to sequentially position the pouches at a fill station;
b) directing a flow of gas through a fill opening of each positioned pouch to inflate a positioned pouch;
c) closing a sealer and sealer pad against each such inflated pouch and expelling a portion of the inflation gas from the inflated pouch whereby to prevent the pouch from rupturing during the sealing step; and
d) sealing the pouch to form an inflated dunnage unit.

24. The process of claim 23, wherein a deflation element is connected to the sealer pad and the closing and expelling steps are accomplished by moving the pad and element toward the sealer and engaging a positioned and inflated pouch.

25. The process of claim 24, wherein a further deflation element is connected to the sealer and the bars coact to effect the expelling step.

26. The process of claim 24, wherein the feeding step is accomplished by a machine and deflation elements are carried by the machine and positioned on opposite sides of the fill station.

27. The process of claim 24, wherein a prime mover is interposed between one of the elements and a body of the machine.

28. The process of claim 27, wherein the one element is a seal bar element.

29. The process of claim 27, wherein the one element is a seal pad element.

30. A machine for forming dunnage units from elongated webs having preformed pouches connected end to end, the machine comprising:
a) structure defining a path of web travel from a supply to dunnage unit formation station;
b) a nozzle for emitting a flow of gas under pressure positioned at the station and oriented to direct a flow of gas through a fill opening in each such pouch when positioned in the station;
c) a heat sealer including sealer and seal pad members relatively moveable between spaced and sealing positions; and
d) relatively moveable pouch deflating elements moveable between spaced and deflating positions as the members are moved from their spaced to their sealing position for engaging an inflated pouch and expelling part, of such gas within the inflated pouch.

31. The machine of claim 30, wherein the elements are carried by a body of the machine

32. The machine of claim 31, wherein a prime mover is interposed between one of the elements and the body.

33. The machine of claim 32, wherein the one element is a seal pad element.

34. In a dunnage formation machine utilizing preformed pouches interconnected in a chain, an improved closure mechanism comprising:
a) a seal bar mounted at a work station;
b) a seal pad assembly removably mounted at the station;
c) the assembly including a pad prime mover for repetitively and sequentially engaging fluid filled pouches to clamp each such pouch against the seal bar to effect a seal in each such pouch;
d) a fixed plate mounted near a selected one of the bar and pad;
e) a coacting plate movably mounted near the other of the bar and pad; and
f) a plate prime mover connected to the moveable plate toward the fixed plate to squeeze a filled pouch at the station prior to the pad clamping such filled pouch whereby to control the volume of fluid in the filled pouch.

35. The closure mechanism of claim 34, wherein the selected one is the pad.

36. The closure mechanism of claim 34, wherein the selected one is the bar.

37. A process of producing dunnage comprising:
a) directing a stream of air along a surface of a face of preformed plastic pouch to and over a slit in the surface and thereby separating a portion of the face front and back of the pouch; and
b) thereafter continuing to flow the stream of air to inflate the pouch.

38. The process of claim 37 further including the step of sealing the pouch to maintain the inflation.

39. The process of claim 37 further including controlling the extent of inflation by engaging said surface of the face and a surface of the back.

40. The process of claim 37, wherein the stream of air is directed at an angle of from about 0° to about 45° with the face.

41. The process of claim 40, wherein the angle is about 0°.
